(19) **Europäisches Patentamt**

**European Patent Office**

**Office européen des brevets**

(11) **EP 0 716 000 B1**

(12) **EUROPÄISCHE PATENTSCHRIFT**

(45) Veröffentlichungstag und Bekanntmachung des Hinweises auf die Patenterteilung:
**09.01.2002 Patentblatt 2002/02**

(51) Int Cl.$^7$: **B60T 8/00**

(21) Anmeldenummer: **95118211.2**

(22) Anmeldetag: **20.11.1995**

(54) **Verfahren zur Bestimmung der Fahrbahnneigung**

Procedure for determining the road gradient

Procédé pour déterminer la pente de la chaussée

(84) Benannte Vertragsstaaten:
**FR GB IT NL SE**

(30) Priorität: **07.12.1994 DE 4443522**

(43) Veröffentlichungstag der Anmeldung:
**12.06.1996 Patentblatt 1996/24**

(73) Patentinhaber: **DaimlerChrysler AG**
**70567 Stuttgart (DE)**

(72) Erfinder:
• **Aminpour, Ali**
**D-71334 Waiblingen (DE)**
• **Reiner, Michael**
**D-70736 Fellbach (DE)**

(56) Entgegenhaltungen:
DE-A- 3 334 719      DE-A- 3 933 652
DE-C- 4 308 128      US-A- 5 132 906

**Beschreibung**

Die Erfindung betrifft ein Verfahren zur Bestimmung der Fahrbahnneigung nach dem Oberbegriff von Anspruch 1, wie es beispielsweise aus der DE 43 08 128 C1 hervorgeht.

Bei diesem Verfahren zur Bestimmung der Fahrbahnlängsneigung werden die Raddrehzahlen kontinuierlich erfaßt und daraus die mittleren Radgeschwindigkeiten der Räder an der freilaufenden und an der angetriebenen Achse ermittelt. Aus diesen Radgeschwindigkeiten wird dann die Schlupfdifferenz und die Verzögerung des Fahrzeugs berechnet. Anhand einer Vorzeichenauswertung der Schlupfdifferenz und der Verzögerung wird auf Abwärts-, Aufwärts- oder horizontale Fahrt geschlossen. Zwar ist mittels einer Unterteilung der Schlupfdifferenzwerte auch eine Aussage über die Größe der Neigung möglich. Diese Größe kann nur gewissen Bereichen zugeordnet werden, so dass die Genauigkeit von der Anzahl der vorgegebenen Bereiche abhängt.

Aus der US 43 52 405 ist es weiterhin bekannt, die Neigung der Fahrbahn durch einen Neigungssensor zu erfassen und in einer Auswerteeinheit auszuwerten. Die Erfassung der Neigung der Fahrbahn in Fahrtrichtung dient dabei dazu, die Betriebsstellung einer Dauerbremsanlage des Fahrzeugs so zu wählen, daß die Hangabtriebskräfte durch ein entsprechendes Bremsmoment der Dauerbremsanlage kompensiert werden.

Diese Einrichtung benötigt eine aufwendige Sensorik, um den Neigungswinkel der Fahrbahn in Fahrtrichtung zu bestimmen. Ferner unterliegt diese Sensorik den laufenden Schwankungen des Fahrzeugaufbaus und den Erschütterungen des Fahrzeugs, wodurch die Meßgenauigkeit beeinträchtigt wird. Außer bei Fahrzeugen mit Luftfederung berücksichtigt eine Neigungssensorik auch nicht die durch unterschiedliche Beladung des Fahrzeugs wechselnde Neigung des Aufbaus gegenüber der Fahrbahn.

Aufgabe der Erfindung ist es, ohne zusätzliche Sensorik, aus im Fahrzeug zu anderen Zwecken erfaßten Signalen, die Neigung der Fahrbahn in Fahrtrichtung des Fahrzeugs zu ermitteln.

Diese Aufgabe wird bei Zugrundelegung der gattungsgemäßen Bestimmung der Fahrbahnneigung erfindungsgemäß durch die kennzeichnenden Merkmale von Anspruch 1 gelöst.

Es wird zumindest einmal ein frei rollender Zustand der zumindest einen angetriebenen Achse des Fahrzeugs erkannt. In diesem Zustand rollen auch die Räder der angetriebenen Achse schlupffrei. Im Sinne des Abgleichs der Raddrehzahlen zwischen den angetriebenen Achsen und den nicht angetriebenen Achsen wird die Differenzdrehzahl zwischen der Raddrehzahl einer angetriebenen Achse und der Raddrehzahl einer nicht angetriebenen Achse ermittelt. Gleichzeitig wird der Wert der Abbremsung, also der Fahrzeugverzögerung ermittelt. Innerhalb eines vorgegebenen zeitlichen Abstand zu dem frei rollenden Zustand der angetriebenen Achse, wird dann zumindest einmal ein als stationär erkannter Antriebszustand der angetriebenen Achse erfaßt. Die Differenzdrehzahl zwischen der angetriebenen Achse und der nicht angetriebenen Achse sowie die Abbremsung des Fahrzeugs wird ermittelt. Der Wert der Abbremsung ist dabei normalerweise negativ, das heißt das Fahrzeug wird beschleunigt.

Die Differenz der Differenzdrehzahlen, die während diesen beiden Fahrzuständen ermittelt wurden, ist ein Maß für die Antriebskraft. Der bestimmte zeitliche Abstand zwischen der Erfassung bei einem frei rollenden Zustand der Antriebsräder und dem stationär angetriebenen Zustand der Antriebsräder stellt sicher, daß sich die Neigung der Fahrbahn nicht wesentlich geändert hat.

Aus den ermittelten Werten der Differenzdrehzahlen und der Abbremsungen wird der Wert einer Neigungskonstanten ermittelt. Mit der Neigungskonstanten kann, sobald ein stationärer Zustand der angetriebenen Achse festgestellt wird, aus den dann ermittelten Werten der Differenzdrehzahl und Abbremsung die Fahrbahnneigung bestimmt werden.

Der Zustand frei rollender Antriebsräder tritt in der Regel dann auf, wenn ein Gangwechsel stattfindet und zu diesem Zwecke die Kupplung betätigt wird. Der Kraftschluß zwischen Motor und angetriebener Achse ist dann unterbrochen. Da zur Auswertung die Hochschaltpausen, also die Gangwechsel bei denen ein höherer Gang eingelegt wird, besonders geeignet sind, wird der Zustand frei rollender Antriebsräder im folgenden auch als Hochschaltpausen bezeichnet. An die meisten Hochschaltpausen schließt sich eine Beschleunigungsphase an, so daß sich unmittelbar nach einer Hochschaltpause häufig ein stationärer Antriebszustand einstellt.

Gemäß der Ausgestaltung der Erfindung nach Anspruch 2 wird die Abbremsung aus der zeitlichen Veränderung der Raddrehzahlen ermittelt. Gemäß dieser Ausgestaltung der Erfindung genügt die Erfassung der Raddrehzahlen als einzige Meßgrößen zur Durchführung der Erfindung.

In weiteren Ausgestaltungen der Erfindung ist dargelegt, wie aus den erfaßten Raddrehzahlen oder daraus ermittelbaren Größen ein Zustand frei rollender Antriebsräder beziehungsweise ein stationärer Antriebszustand einer angetriebenen Achse festgestellt werden kann.

Gemäß einer weiteren Ausgestaltung wird für jede Fahrt zunächst ein Wert für die Neigungskonstante ermittelt, bevor eine Ermittlung der Neigung der Fahrbahn erfolgen kann.

Gemäß einer Ausgestaltung der Erfindung wird bei jeder möglichen Gelegenheit, die Neigungskonstante zu bestimmen, ein neuer Wert für die Neigungskonstante ermittelt. Der Mittelwert aus den während einer Fahrt ermittelten Werten der Neigungskonstante wird als Neigungskonstante verwendet.

Gemäß der Ausgestaltung der Erfindung nach Anspruch 17 wird aufgrund des zuletzt ermittelten Wertes für die Neigung der Fahrbahn ein Drucksockelwert ermittelt, wenn zwischen dem Zeitpunkt der Ermittlung des Wertes für die Neigung und der Betätigung eine vorgegebene Haltezeit nicht überschritten ist. Der Drucksockelwert, der gegebenenfalls auch einen negativen Betrag aufweisen kann, wird zumindest dann zu dem sich aus der Stellung des Bremspedals ergebenden Bremsdrucksollwert addiert, wenn die Neigung ein Gefälle der Fahrbahn repräsentiert.

Zweckmäßige Ausgestaltungen der Erfindung können den Unteransprüchen entnommen werden; im übrigen ist die Erfindung an Hand eines in der Zeichnung dargestellten Ausführungsbeispieles nachfolgend noch erläutert; dabei zeigen:

Fig. 1    ein Ablaufdiagramm eines erfindungsgemäßen Verfahrens,

Fig. 2    ein Beispiel für die über der Zeit aufgetragenen Verläufe von aus den Raddrehzahlen abgeleiteten Größen und

Fig. 3    3 ein Beispiel für die Ermittlung der Neigungskonstanten aus jeweils einem für einen frei rollenden Zustand der angetriebenen Achse und einem stationären Antriebszustand ermittelten Wertepaar der Abbremsung und der Differenzdrehzahl.

Fig. 4    die Ermittlung eines stationären Zustands anhand eines Beispiels für die Abbremsung z.

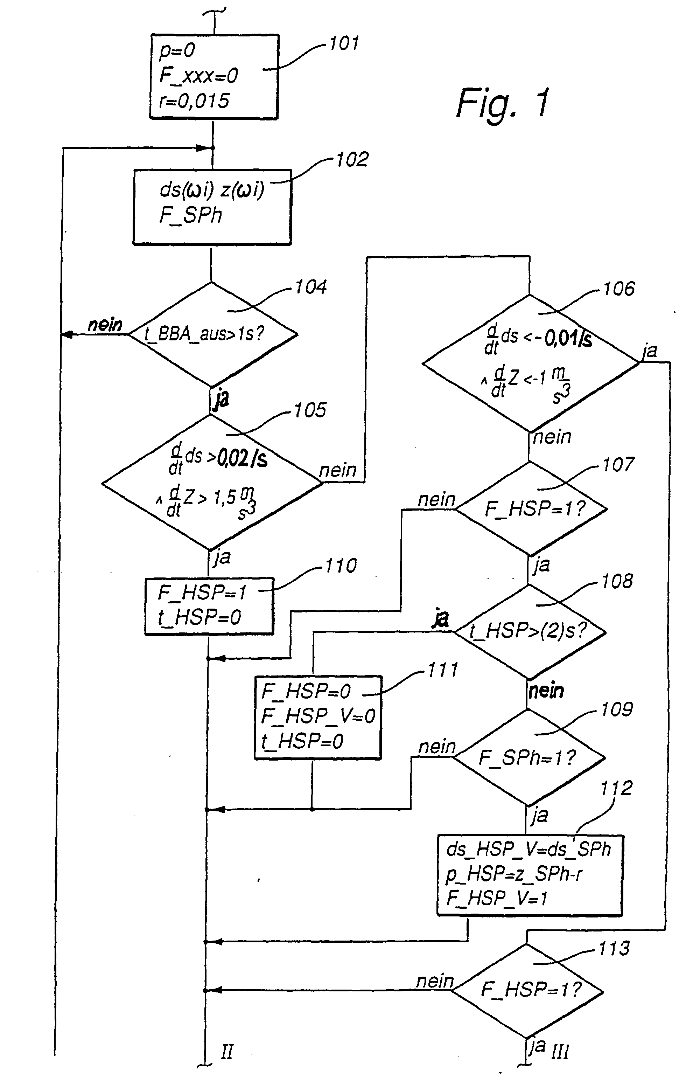

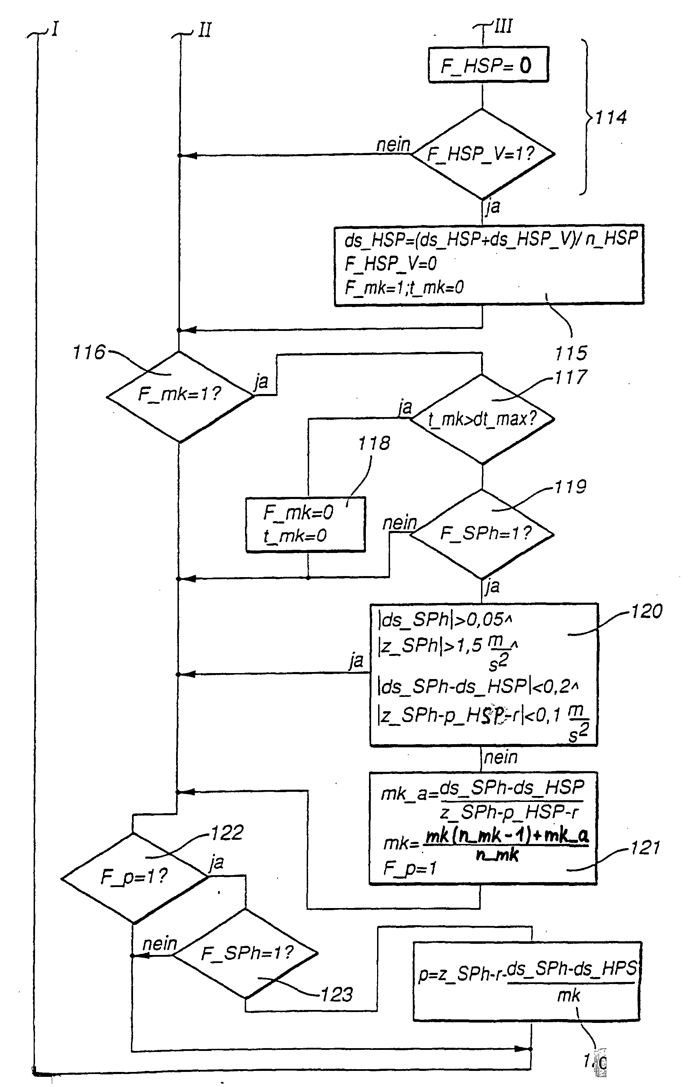

Die Figur 1 zeigt ein Ablaufdiagramm eines erfindunggsgemäßen Verfahrens, das zyklisch durchgeführt wird.

Dabei wurde folgende Bezeichnungen verwendet:

- die Abkürzung HSP steht für Hochschaltpause und bezeichnet allgemein einen frei rollenden Zustand der angetriebenen Achse;
- Die Abkürzung SPh steht für stationäre Phase und bezeichnet während einer Hochschaltpause oder während eines Antriebszustands festgestellte stationäre Phasen;
- In Verbindung mit der Bezeichnung einer Größe ist der in dem entsprechenden Zustand gemessene oder bestimmte Wert der Größe bezeichnet;
- die diversen Zeiger, die zur Feststellung von Verzweigungen gesetzt werden, sind mit "F_" und der daran angehängten Größe als Kennzeichnung des Zeigers bezeichnet und
- es werden verschiedene Zeitintervalle gemessen, die mit "t_" und einer daran angehängten Kennzeichnung der Bedeutung des Zeitintervalls bezeichnet sind.

Im Schritt 101 wird eine Initialisierung durchgeführt. Die Werte aller Zeiger F_ werden auf Null zurückgesetzt. Der Wert der Fahrbahnneigung in Fahrtrichtung p wird auf Null zurückgesetzt. Für die auf Fahrwiderständen beruhende Fahrzeugverzögerung r wird der Wert aus einem Speicher eingelesen. Dieser Wert kann entweder als fester Wert vorgegeben sein oder aber in Abhängigkeit von Fahrzeugparametern und den Fahrzustand repräsentierenden Größen ausgewählt werden. So ist der Luftwiderstandsbeiwert des Fahrzeugs bekannt und seine Geschwindigkeit beispielsweise aus den Raddrehzahlen ableitbar, so daß der Anteil des Luftwiderstandes an den Fahrwiderständen zumindest näherungsweise bestimmt werden kann. Ähnliches gilt für die Einflüsse der rotierenden Massen. Experimentell kann er auch auf einer Kalibrierstrecke mit bekannter Fahrbahnneigung, beispielsweise einer Ebene, bestimmt werden. Diese Initialisierung erfolgt zu Beginn jeder Fahrt, da sich wesentliche Faktoren am Fahrzeug verändern können, beispielsweise die Beladung.

Im Schritt 102 werden unzulässige Fahrzustände ausgefiltert. Aus den Raddrehzahlsignalen wird, beispielsweise aufgrund eines fahrzeugseitenweisen Vergleichs der Raddrehzahlen, Kurvenfahrt erkannt und von dem weiteren Verfahren ausgeschlossen. Es wird überprüft, ob die in diesem Zyklus ermittelten Werte der Differenzdrehzahl ds und der Abbremsung z einem stationären Zustand zugeordnet werden können. In diesem Fall wird der Zeiger F_SPh auf "1" gesetzt. Andernfalls wird er auf "0" gesetzt.

Als unzulässiger Fahrzustand kann auch die Betätigung der Bremse gewertet werden. Dies ist dann erforderlich, wenn die aus der Betätigung der Bremse resultierende Verzögerung und somit die daraus resultierenden Bremsmomente nicht hinreichend genau ermittelt werden können. Ist die aus der Betätigung der Bremse resultierende Verzögerung jedoch hinreichend genau bekannt, so kann das Verfahren auch dann durchgeführt werden, wenn die Bremse betätigt ist.

Im Schritt 104 wird überprüft, ob die Zeit die nach dem Ende der letzten Bremsbetätigung verstrichen ist, größer ist als eine Sekunde. Dies dient dazu, von Bremsvorgängen beeinflußte Signale auszuschließen.

In den Schritten 105 bis 115 werden die Hochschaltpausen und die stationären Zustände ermittelt und die entsprechenden Werte der benötigten Größe bestimmt. In den Schritten 116 bis 121 wird daraus der Wert der Neigungskonstanten mk durch Mittelwertbildung mit vorher ermittelten Werten der Neigungskonstanten ermittelt. Die Schritte 122 bis 124 dienen der Ermittlung der Fahrbahnneigung, sobald ein Wert für die Neigungskonstante vorliegt.

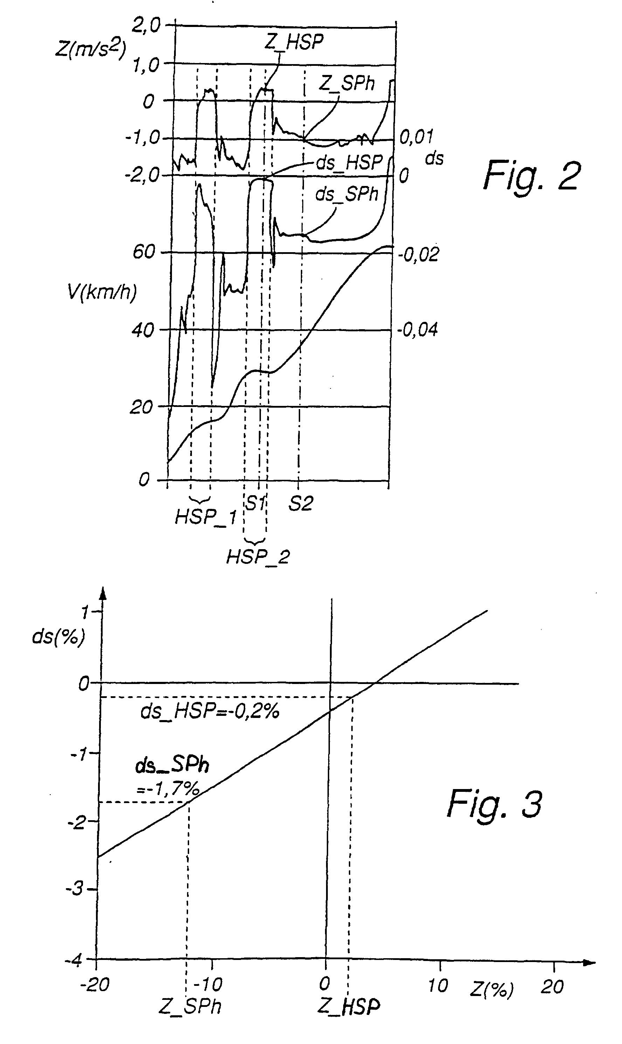

Im Schritt 105 wird dabei überprüft, ob ein schneller Anstieg der Differenzdrehzahl ds und gleichzeitig ein schneller Anstieg der Abbremsung dz erfolgt. Die Zeitableitung dieser beiden Größen muß also numerisch ermittelt werden. Dazu wird beispielsweise die Differenz aus dem aktuellen Wert der Differenzdrehzahl ds und dem Wert der Differenzdrehzahl ds' bei der vorangegangenen Ermittlung berechnet und der Quotient der Differenz mit der zwischen den beiden Ermittlungen der Differenzdrehzahl vergangenen Zeit gebildet. Analog kann bei der Abbremsung z vorgegangen werden. Die erhaltenen Werte werden mit vorgegebenen oberen Schwellenwerten verglichen. Für die Zeitableitung der Differenzdrehzahl - die gemäß der in der Beschreibung der Fig.2 in Form einer dimensionslosen Größe, deren Zeitableitung somit in der Einheit 1/s, vorliegt -, liegt der Schwellenwert beispielsweise bei 0,02* 1/s. Der Schwellenwert für die Zeitableitung der Abbremsung hat die Einheit $m/s^3$ und beispielsweise einen Wert von $1,5\ m/s^3$. Es ist dabei zu beachten, daß sowohl die Größen Abremsung als auch Differenzdrehzahl mit einem relevanten Vorzeichen behaftet sind und daher auch die Verringerung des Betrages eines Wertes mit negativen Vorzeichen als Anstieg bezeichnet ist.

Werden die oberen Schwellenwerte sowohl für den Anstieg der Differenzdrehzahl als auch für den Anstieg der Abbremsung überschritten, so wird auf den möglichen Beginn einer Hochschaltpause geschlossen und gemäß Schritt 110 der Zeiger F_HSP, der eine Hochschaltpause kennzeichnet, gesetzt, das heißt er nimmt den Wert "1" an. Der Zeitzähler t_HSP für die Dauer der Hochschaltpause bzw. des frei rollenden Zustands der Antriebsachse wird ebenfalls auf "0" zurückgesetzt. Anschließend wird zum Schritt 116 gesprungen.

Wird in Schritt 105 festgestellt, daß die Schwellenwerte nicht überschritten wurden, so wird im Schritt 106 überprüft, ob eine rasche Verringerung (ein steiler Abfall) der Abbremsung und der Differenzdrehzahl vorliegt. Dazu wird überprüft ob die Zeitableitung der Differenzdrehzahl ds und die Zeitableitung der Abbremsung z vorgegebene untere Schwellenwerte unterschreiten. Dabei ist zu beachten, daß wegen des Vorzeichens eine rasche Verringerung einer betragsmäßigen Erhöhung der Größen entspricht, sofern die unteren Schwellenwerte negatives Vorzeichen aufweisen. Der untere Schwellenwert für die Zeitableitung der Differenzdrehzahl ds liegt beispielsweise bei -0,01 1/s, der untere Schwellenwert für die Abbremsung z beispielsweise bei $-1\ m/s^3$.

Werden die beiden unteren Schwellenwerte unterschritten, so wird auf ein mögliches Ende einer Hochschaltpause geschlossen und zum Schritt 113 gesprungen. Dort wird überprüft, ob zuvor der Beginn einer Hochschaltpause festgestellt wurde, indem überprüft wird, ob der Zeiger F_HSP den Wert 1 aufweist. Nur wenn vor dem Ende ein Beginn einer Hochschaltpause festgestellt wurde, kann es sich bei dem steilen Abfall der Abbremsung z und der Differenzdrehzahl ds um das Ende einer Hochschaltpause handeln. Weist der Zeiger F_HSP nicht den Wert "1" auf so wird zum Schritt 116 geprungen. Andernfalls liegt tatsächlich eine verwertbare Hochschaltpause vor und es wird im Schritt 115 die Berechnung der Differenzdrehzahl ds_HSP für den frei rollenden Zustand der angetriebenen Achse ermittelt.

Dies geschieht durch Mittelwertbildung unter Verwendung des zwischengespeicherten Wertes der Differenzdrehzahl ds_HSP_V beispielsweise nach der Gleichung

$$ds\_HSP = (ds\_HSP*[n\_HSP-1] + ds\_HSP) / n\_HSP \ ,$$

wobei n_HSP die Anzahl der während der vorliegenden Fahrt ermittelten verwertbaren Hochschaltpausen ist, die in diesem Schritt vor der Berechnung auch inkremeniert wird. Der Zeiger F_HSP_V wird auf "0" zurückgesetzt, der Zeiger F_mk für die Ermittlung der Neigungskonstanten mk wird auf "1" gesetzt und der Zeitzähler t_mk wird auf "0" zurückgesetzt. Anschließend wird zum Schritt 116 gesprungen.

Die so ermittelte Drehzahldifferenz ds_HSP ist ein Maß für die Drehzahlunterschiede zwischen der nicht angetriebenen Achse und der angetriebenen Achse. Sie kann als Grundlage für einen Drehzahlabgleich, beispielsweise für eine Reifendruckbestimmung oder ein Antiblockiersystem verwendet werden. Sie wird laufend aktualisiert und ist, da sie nur aus während frei rollenden Zuständen erfaßten Meßwerten beruht, ein sehr gutes Maß für die Drehzahldifferenz aufgrund unterschiedlicher Radumfänge.

Wird im Schritt 106 festgestellt, daß ein steiler Abfall der Abbremsung z und der Differenzdrehzahl ds nicht vorliegt, so wird in den Schritten 107 bis 109 und 111 bis 112 eine Plausibilitätsüberprüfung gestartet. Dazu wird im Schritt 107 überprüft, ob in einem vorangegangenen Zyklus der Zeiger F_HSP auf "1" gesetzt wurde, also ob der Beginn einer Hochschaltpause ermittelt wurde. Ist dies nicht der Fall, so wird zum Schritt 116 gesprungen. Andernfalls wird im Schritt 108 überprüft, ob der Zeitzähler t_HSP für die Dauer der Hochschaltpause seit dem Setzen des Zeigers F_HSP einen Grenzwert von beispielsweise 2s überschritten hat. Ist dies der Fall, so werden im Schritt 111 die Zeiger F_HSP und F_HSP_V und der Zeitzähler t_HSP auf "O" zurückgesetzt, da ein so langes Andauern einer Hochschaltpause beziehungsweise eines frei rollenden Zustands der Räder nicht plausibel ist. Nach dem Schritt 111 wird zum Schritt 116 gesprungen.

Wird im Schritt 108 dagegen festgestellt, daß der Zeitzähler t_HSP die Zeitgrenze nicht überschritten hat, so wird im Schritt 109 überprüft ob ein stationärer Zustand vorliegt, das heißt, ob der Zeiger F_SPh auf "1" gesetzt ist. Ist das nicht der Fall, so wird zum Schritt 116 gesprungen. Andernfalls wird im Schritt 112 der Zeiger F_HSP_V auf "1" gesetzt, als Wert für die zwischengespeicherte Differenzdrehzahl ds_HSP_V wird der als stationär erkannte Wert der Differenzdrehzahl ds_SPh eingelesen und der Wert für die neigungsbedingte Abbremsung p_HSP wird aus der als stationär erkannten Abbremsung z_SPh nach der Gleichung

$$p\_HSP=z\_SPh-r$$

ermittelt, wobei r die sich aus den Fahrwiderständen ergebende Verzögerung und z_SPh die dem stationären Zustand zugehörige Abbremsung ist. Dabei wurden die Abremsung z_SPh und die Differenzdrehzahl ds_SPh im Schritt 102 für den gleichen Zeitpunkt ermittelt. Anschließend wird zum Schritt 116 gesprungen.

Im Schritt 116 wird überprüft, ob der Zeiger F_mk für die Berechnung der Neigungskonstanten auf "1" gesetzt ist. Ist dies nicht der Fall, wird zum Schritt 122 gesprungen. Ansonsten wird im Schritt 117 überprüft, ob der Zeitzähler t_mk den vorgegebenen zeitlichen Abstand dt_max, beispielsweise 7 s, noch nicht überschritten hat. Anstelle einer festen Zeitschwelle kann dt_max auch als Wegschwelle oder geschwindigkeitsabhängig vorgegeben sein. So kann der vorgegebene zeitliche Abstand dt_max beispielsweise nach der Gleichung

$$dt\_max = (100 / v) + 2s$$

berechnet werden, wobei v die Geschwindigkeit in km/h ist. Dies entspricht einer geschwindigkeitsabhängigen Zeit oder Wegschwelle von ungefähr 50 m bei einer Geschwindigkeit von 50 km/h. Mit zunehmender Geschwindigkeit v wird der maximale zeitliche Abstand dt_max verringert, damit die dem Verfahren zugrundeliegende Annahme, daß die Neigung p der Fahrbahn in Fahrtrichtung wenigstens annähernd konstant bleibt, zutrifft. Wird im Schritt 117 festgestellt, daß der maximale zeitliche Abstand dt_max überschritten wurde, so kann der während der vorangegangenen Hochschaltpause gemessene Wert nicht weiter zur Bestimmung der Neigungskonstanten herangezogen werden. Im Schritt 118 wird daher der Zeiger F_mk und der Zeitzähler t_mk auf "0" zurückgesetzt und zum Schritt 122 gesprungen.

Wird im Schritt 117 dagegen festgestellt, daß der maximale zeitliche Abstand dt_max noch nicht überschritten wurde, kann eine Bestimmung der Neigungskonstanten mk erfolgen, wenn ein stationärer Zustand vorliegt. Dazu wird im Schritt 119 überprüft, ob der Zeiger F_SPh auf "1" gesetzt ist. Ist das nicht der Fall, so ist zur Zeit kein stationärer Zustand gegeben und es wird zum Schritt 122 gesprungen. Ansonsten findet im Schritt 120 eine Überprüfung der gemessenen Werte des stationären Zustandes statt, um unzulässige oder die Meßgenauigkeit beeinträchtigende Werte auszuschließen. Es werden die Fälle zu geringer Antriebskräfte und die Fälle zu großer Abbremsung z oder zu großer Differenzdrehzahl ds_SPh ausgeschlossen. Die letzten beiden Kriterien dienen dazu, Zustände, in denen die Hypothese linearer Reifenkennlinien nicht mehr vertretbar angewendet werden kann, auszuschließen. Es wird also überprüft

ob entweder der Betrag der Abbremsung z_SPh des stationären Zustands größer ist als beispielsweise 1,5 m/s$^2$

oder ob der Betrag der Differenzdrehzahl ds_SPh größer ist als beispielsweise 0,05

oder ob der Betrag der Differenz aus der Differenzdrehzahl ds_SPh des als stationär erkannten Antriebszustands und der Differenzdrehzahl ds_HSP des frei rollenden Zustands der Antriebsachse kleiner ist als beispielsweise 0,02

oder ob der Betrag der Differenz aus der Abbremsung z_SPh und der Abbremsung z_HSP kleiner ist als beispielsweise 0,1 m/s$^2$.

Ist dies der Fall, so kann der als stationär erkannte Antriebszustand nicht zur Bestimmung der Neigungskonstanten herangezogen werde und es wird zum Schritt 122 gesprungen.

Andernfalls wird im Schritt 121 ein neuer Wert für die Neigungskonstante mk durch Mittelwertbildung mit eventuell während der vorliegenden Fahrt schon ermittelten Werten der Neigungskonstanten mk berechnet. Zunächst wird der Wert der Neigungskonstanten mk_a aus den aktuellen Werten der Abbremsung z und der Differenzdrehzahl ds nach der Gleichung

$$mk\_a = [ds\_SPh - ds\_HSP] / [z\_SPh - z\_HSP]$$

ermittelt. Die Werte der Abbremsung werden dann aus Plausibilitätsgründen auf ein Intervall von beispielswise 0,005 bis 0,12 beschränkt. Anschließend erfolgt die Mittelwertbildung nach der Gleichung

$$mk = [mk*(n\_mk - 1) + mk\_a] /n\_mk ,$$

wobei n_mk ein Zähler für die Anzahl der Ermittlungen der Neigungskonstanten während der Fahrt ist, der zuvor inkrementiert wurde. Der Zeiger F_p wird auf "1" gesetzt, das heißt die Ermittlung der Neigung p der Fahrbahn in Fahrtrichtung wird ermöglicht. Der Schritt 122 schließt sich an.

Im Schritt 122 wird überprüft, ob der Zeiger F_p auf "1" gesetzt ist, das heißt ob während der vorliegenden Fahrt zumindest einmal eine Neigungskonstante mk ermittelt wurde. Erst dann ist es möglich, die Neigung der Fahrbahn in Fahrtrichtung korrekt zu bestimmen. Falls dies nicht gegeben ist, wird zum Schritt 102 gesprungen, ein neuer Arbeitszyklus beginnt. Ansonsten wird im Schritt 123 überprüft, ob ein stationärer Zustand der Differenzdrehzahl ds und der Abbremsung z erfaßt wurde. Ist dies nicht gegeben, wird zum Schritt 122 zurückgesprungen. Ansonsten erfolgt im Schritt 124 die Bestimmung der Neigung p nach der Gleichung

$$p = z\_SPh-r-\frac{ds\_SPh-ds\_HSP}{mk}$$

wobei zur Berechnung für die Verzögerungen auf die Erdbeschleunigung normierte Werte verwendet werden. Die Neigung p ist eine dimensionslose Größe und entspricht dem Tangens des Neigungswinkels der Fahrbahn. Eine negative Neigung entspricht einem Gefälle und eine positive Neigung einer Steigung der Fahrbahn. Anschließend wird zum Schritt 102 gesprungen und ein neuer Zyklus beginnt. Der zuletzt ermittelte Wert der Neigung kann beispielsweise dazu verwendet werden, einen Drucksockelwert, der bei einer Steigung ein negatives Vorzeichen aufweist, zu ermitteln, der auf den durch die Stellung des Fahrpedals vorgegebenen Drucksollwert aufaddiert wird. Dadurch wird der eingesteuerte Bremsdruck besser an eine durch die Stellung des Bremspedal vorgegebene Sollverzögerung angepaßt. Sobald die Neigungskonstante mk einmal bestimmt istkann in der Folge während der Fahrt nach jeder erkannten stationären Phase ein aktueller Wert der Fahrbahnneigung p ermittelt werden. Die stationären Phasen treten im Fahrbetrieb in zeitlichen Abständen von ca. 0,5 bis zu einigen Sekunden auf. In der Regel wird letztmalig dann eine stationäre Phase erkannt, wenn der Fahrer mit seinem Fuß vom Gaspedal zum Bremspedal wechselt, also unmittelbar vor der Bremsbetätigung. Es liegt also laufend ein aktueller Wert für die Fahrbahnneigung vor.

Die Fig. 2 zeigt den Verlauf der drei Kurven Fahrzeuggeschwindigkeit in km/h, Differenzdrehzahl (dimensionslos) und Abbremsung in $m/s^2$ für einen Anfahrvorgang aus dem Stand auf der Ebene über der Zeit t. Die zuoberst dargestellte Kurve gibt den Verlauf der Abbremsung z wieder, in der Mitte ist die Kurve für die Differenzdrehzahl ds und unten die Kurve für die Fahrzeuggeschwindigkeit v wiedergegeben.

Alle drei Größen, Abbremsung, Differenzdrehzahl und Fahrzeuggeschwindigkeit können aus den Raddrehzahlen abgeleitet werden. Dabei ist die Differenzdrehzahl als dimensionslose Größe definiert, damit sie unabhängig von der Fahrzeuggeschwindigkeit ist. Zur Bestimmung der Differenzdrehzahl wird die Raddrehzahl ω für eine angetriebene Achse, beispielsweise die Raddrehzahl ω_HA der Hinterachse, und für eine nicht angetriebene Achse, beispielsweise die Raddrehzahl ω_VA der Vorderachse, ermittelt. Die Differenzdrehzahl ist dann als Quotient aus der Drehzahldifferenz zu der Drehzahl der nicht angetriebenen Achse definiert, wird also nach der Gleichung

$$ds = [\omega\_VA - \omega\_HA] / \omega\_VA$$

berechnet.

In den dargestellten Kurven sind 2 Hochschaltpausen erkennbar. Dabei kann die erste Hochschaltpause aufgrund der stark schwankenden Werte der Drehzahldifferenz ds nicht zur Bestimmung der Neigungskonstanten herangezogen werden. Der Beginn der Hochschaltpausen ist durch den steilen Anstieg der Abbremsung z leicht zu erkennen. Ebenso ist durch den steilen Abfall das Ende der Hochschaltpausen HSP_1 und HSP_2 zu erke. Während der Hochschaltpause HSP_2 wird zum Zeitpunkt S1 ein frei rollender Zustand der Antriebsachse, während dem die Differenzdrehzahl ds und die Abbremsung z eine stationäre Phase aufweisen, festgestellt, so daß diese Werte als Differenzdrehzahl ds_HSP und Abbremsung z_HSP zur Berechnung der Neigungskonstanten mk verwendet werden.

Im weiteren Verlauf wird zum Zeitpunkt S2 ein stationärer Antriebszustand mit der Differenzdrehzahl ds_SPH und der Abbremsung z_SPh ermittelt.

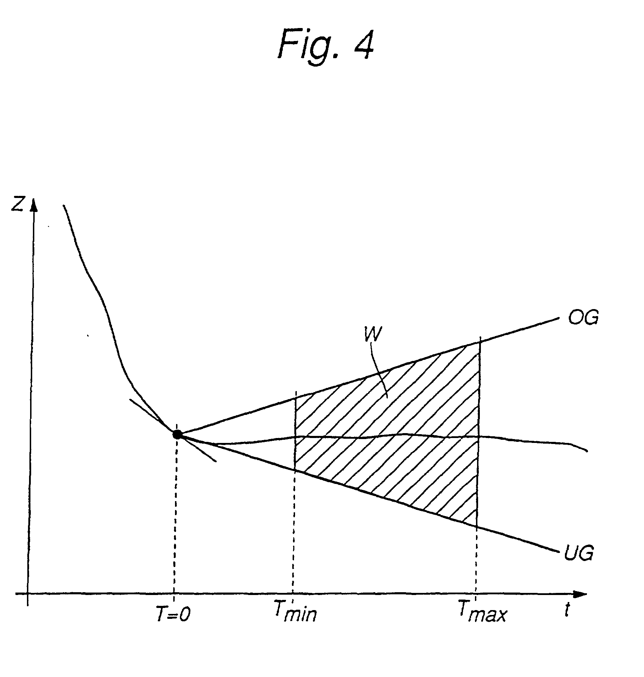

Wie im zeitlichen Verlauf der Wert einer Größe als einem stationären Zustand zugehörig gewertet wird ist im folgenden an Hand der Abbremsung z beschrieben und ist in Fig. 4 dargestellt. Fällt der Betrag der Zeitableitung der Abbremsung z unter einen vorgegebenen Schwellenwert - beispielsweise $1\ m/s^3$ - so wird ein Zeitzähler gestartet. Nach einer Minimalzeit Tmin nach dem Anfangszeitpunkt T=0 - beispielsweise Tmin= 0,2 s - wird bis zu einer Maximalzeit Tmax - beispielsweise Tmax= 1 s - überwacht, ob die Abbremsung z ein Werteintervall W verläßt, dessen Obergrenze OG und Untergrenze UG durch zwei Geraden definiert sind, die sich in dem Punkt schneiden, in dem der Betrag der Zeitableitung den Schwellenwert unterschreitet. Die Steigung der Geraden liegt dabei beispielsweise bei 0,5 m/$s^3$

In der Fig 3 ist dargestellt, wie sich die Neigungskonstante aus den während der Hochschaltpause HSP_2 und dem stationären Zustand S2 gewonnenen Meßwerten ergibt. Die Abbremsung z ist als Abszisse und die Differenzdrehzahl ds als Ordinate aufgetragen. Die Neigungskonstante entspricht der Steigung der Gerade, die die zu den Zeitpunkten S1 und S2 gemessenen Punkte mit den Koordinaten (z_HSP, ds_HSP) bzw. (z_SPh, ds_SPh) verbindet.

**Patentansprüche**

1. Verfahren zur Bestimmung der Fahrbahnneigung, wobei in einer Auswerteeinheit eines Fahrzeugs, insbesondere eines Nutzfahrzeuges, aus Meßsignalen ein die Neigung der Fahrbahn repräsentierendes Signal gewonnen wird und wobei die Raddrehzahlen zumindest einer nicht angetriebenen Achse und zumindest einer angetriebenen Achse erfaßt werden,
   **dadurch gekennzeichnet, daß**

   ☐ zumindest einmal ein frei rollender Zustand (HSP) der zumindest einen angetriebenen Achse erkannt wird und daß für diesen Zustand zumindest der Wert einer Differenzdrehzahl (ds_HSP) zwischen der Raddrehzahl einer angetriebenen Achse und der Raddrehzahl einer nicht angetriebenen Achse sowie der Wert einer Abbremsung (z_HSP) ermittelt wird,

☐ zumindest einmal für einen als stationär erkannten Antriebszustand (SPh) einer angetriebenen Achse, der in einem vorgegebenen zeitlichen Abstand (dt_max) zu dem frei rollenden Zustand der zumindest einen angetriebenen Achse steht, ein Wert der Abbremsung (z_SPh) und ein Wert der Differenzdrehzahl (ds_SPh) zwischen der Raddrehzahl an dieser angetriebenen Achse und einer nicht angetriebenen Achse ermittelt wird,

und daß aus diesen ermittelten Werten eine Neigungskonstante (mk) ermittelt wird,
wobei bei darauffolgenden, als stationären erkannten Zuständen (SPh) einer angetriebenen Achse der Wert einer die Neigung (p) der Fahrbahn in Fahrtrichtung repräsentierenden Größe aus der Neigungskonstanten (mk) und den aktuellen Werten der Abbremsung (z_SPh) und der Differenzdrehzahl (ds_SPh) zwischen der Raddrehzahl an dieser angetriebenen Achse und einer nicht angetriebenen Achse ermittelt wird.

2. Verfahren nach Anspruch 1,
**dadurch gekennzeichnet,**
**daß** die Abbremsung (z) aus der zeitabhängigen Veränderung der Raddrehzahlen zumindest der nicht angetriebenen Achsen ermitttelt wird.

3. Verfahren nach Anspruch 1,
**dadurch gekennzeichnet,**
**daß** dann, wenn ein frei rollender Zustand (HSP) der zumindest einen angetriebenen Achse erkannt wird, überprüft wird, ob dieser Zustand stationär ist, und daß die Werte der Differenzdrehzahl (ds_HSP) und der Abbremsung (z_HSP) nur dann ermittelt werden, wenn während des frei rollenden Zustands (HSP) ein stationärer Zustand (SPh) erkannt wird.

4. Verfahren nach Anspruch 3,
**dadurch gekennzeichnet,**
**daß** die Werte der Differenzdrehzahl (ds_HSP) und der Abbremsung (z_HSP) aus während des stationären Zustands (SPh) erfaßten Werten der Raddrehzahlen ermittelt werden.

5. Verfahren nach Anspruch 4,
**dadurch gekennzeichnet,**
**daß** die Werte der Differenzdrehzahl (ds_HSP) und der Abbremsung (z_HSP) zur Ermittlung der Neigungskonstanten (mk) verwendet werden, die während des letzten, als stationär erkannten Zustands (SPh) des frei rollenden Zustands (HSP) der zumindest einen angetriebenen Achse, ermittelt wurden.

6. Verfahren nach Anspruch 1,
**dadurch gekennzeichnet,**
**daß** der Beginn eines frei rollenden Zustands (HSP) der zumindest einen angetriebenen Achse dadurch erkannt wird, daß kurzzeitig

☐ ein steiler Anstieg der Drehzahldifferenz (ds) zwischen den Raddrehzahlen einer angetriebenen Achse und einer nicht angetriebenen Achse und gleichzeitig
☐ ein steiler Anstieg der Verzögerung (z) erfolgt.

7. Verfahren nach Anspruch 6,
**dadurch gekennzeichnet,**
**daß** das Ende eines frei rollenden Zustandes (HSP) der zumindest einen angetriebenen Achse dadurch erkannt wird, daß kurzzeitig

☐ ein steiler Abfall der Drehzahldifferenz (ds) zwischen einer angetriebenen Achse und einer nicht angetriebenen Achse und gleichzeitig
☐ ein steiler Abfall der Verzögerung (z) erfolgt.

8. Verfahren nach Anspruch 6 oder 7,
**dadurch gekennzeichnet,**
**daß** spätestens nach Ablauf eines vorgegebenen Zeitintervalls (t_HSP) nach dem Beginn eines frei rollenden Zustands (HSP) dieser Zustand als beendet gilt.

9. Verfahren nach Anspruch 8,
**dadurch gekennzeichnet,**
**daß** die während eines frei rollenden Zustandes ermittelten Werte der Differenzdrehzahl (ds_HSP) und der Abbremsung (z_HSP) nicht zur Berechnung der Neigungskonstanten (mk) herangezogen werden, wenn der als frei rollende Zustand (HSP) durch Überschreiten des Zeitintervalls (t_HSP) als beendet gilt.

10. Verfahren nach Anspruch 1 oder 3,
**dadurch gekennzeichnet,**
**daß** ein stationärer Zustand (SPh) erkannt wird, wenn eine beobachtete Größe, die die Verzögerung (z) oder eine von der Verzögerung (z) abhängige Größe - wie die Drehzahldifferenz (ds) zwischen den Raddrehzahlen einer angetriebenen Achse und einer nicht angetriebenen Achse - ist, innerhalb eines Zeitfensters zwischen einem Anfangszeitpunkt (T=0) und einem Endzeitpunkt, ein zeitabhängig vorgegebenes Werteintervall für die Größe nicht verläßt, wobei das Zeitfenster nach dem Verstreichen einer Minimalzeit (Tmin) nach dem Anfangszeitpunkt (T=0) beginnt und spätestens nach einer Maximalzeit (Tmax) endet und wobei der Anfangszeitpunkt (T=0) durch das Unterschreiten eines vorgegebenen Wertes durch den Betrag der Zeitableitung der beobachteten Größe bestimmt ist.

11. Verfahren nach dem Anspruch 10,
**dadurch gekennzeichnet,**

**daß** das Werteintervall (W) durch eine Untergrenze (UG) und eine Obergrenze (OG) bestimmt ist, wobei sowohl die Untergrenze (UG) als auch die Obergrenze (OG) linear abhängig von der seit dem Anfangszeitpunkt vergangenen Zeit (T) sind und daß der Funktionswert der Obergrenze (OG) und der Untergrenze (UG) zum Anfangszeitpunkt dem Wert der beobachteten Größe zum Anfangszeitpunkt entspricht.

12. Verfahren nach Anspruch 1,
**dadurch gekennzeichnet,**
**daß** die Neigungskonstante aus dem Quotienten zwischen der Differenz aus den Werten der Differenzdrehzahl (ds_SPh, ds_HSP) und der Differenz aus den Werten der Abbremsung (z_SPh, z_HSP) gebildet wird.

13. Verfahren nach Anspruch 1,
**dadurch gekennzeichnet,**
**daß** während einer Fahrt aus allen verwertbaren, frei rollenden Zuständen (HSP) der zumindest einen angetriebenen Achse mit anschließendem als stationär erkanntem Antriebszustand (SPh) einer angetriebenen Achse ein neuer Wert für die Neigungskonstante (mk) ermittelt wird und daß ein Mittelwert aus den während einer Fahrt ermittelten Werten der Neigungskonstante (mk) berechnet wird.

14. Verfahren nach Anspruch 1,
**dadurch gekennzeichnet,**
**daß** die Ermittlung einer die Neigung (p) der Fahrbahn in Fahrtrichtung repräsentierenden Größe solange nicht durchgeführt wird, wie nicht seit Fahrtbeginn zumindest einmal ein Wert für die Neigungskonstante (mk) ermittelt wurde.

15. Verfahren nach Anspruch 1,
**dadurch gekennzeichnet,**
**daß** der vorgegebene zeitliche Abstand (dt_max) in Abhängigkeit der Fahrzeuggeschwindigkeit bestimmt ist.

16. Verfahren nach Anspruch 15,
**dadurch gekennzeichnet,**
**daß** der vorgegebene zeitliche Abstand (dt_max) als maximal zurückgelegte Wegstrecke vorgegeben ist.

17. Verfahren nach Anspruch 1,
**dadurch gekennzeichnet,**
**daß** aufgrund des zuletzt ermittelten Wertes für die Neigung (p) der Fahrbahn ein Drucksockelwert ermittelt wird,
wobei der Drucksockelwert zumindest dann zu dem sich aus der Stellung des Bremspedals ergebenden Bremsdrucksollwert addiert wird, wenn die Neigung (p) ein Gefälle der Fahrbahn repräsentiert.

18. Verfahren nach Anspruch 1,
**dadurch gekennzeichnet,**
**daß** die während eines frei rollenden Zustands (HSP) der angetriebenen Achse ermittelten Werte der Raddrehzahlen der Räder der angetriebenen und nicht angetriebenen Achsen zu einem Abgleich der Raddrehzahlen herangezogen werden.

19. Verfahreen nach Anspruch 1,
**dadurch gekennzeichnet,**
**daß** ein Mittelwert aus den während einer Fahrt ermittelten Werten der Differenzdrehzahl (ds_HSP) eines frei rollenden Zustands (HSP) der Antriebsräder gebildet wird.

**Claims**

1. Method for determining the inclination of the roadway, such that in an evaluation unit of a vehicle, in particular a goods vehicle, a signal representing the inclination of the roadway is obtained from measurement signals and such that the wheel rotation speeds of at least one non-driven axle and at least one driven axle are determined,
**characterised in that**

• a freely rolling condition (HSP) of the at least one driven axle is recognised at least once and for this condition at least the value of a rotation speed differential (ds_HSP) between the wheel rotation speed of a driven axle and the wheel rotation speed of a non-driven axle and the value of a braking action (z_HSP) are determined,
• at least once, for a drive condition (SPh) of a drive axle recognised as steady, which occurs a specified time interval (dt) from the freely rolling condition of the at least one driven axle, a value of the braking action (z_SPh) and a value of the rotation speed differential (ds_SPh) between the wheel rotation speed of the said driven axle and of a non-driven axle are determined.

and from these determined values an inclination constant (mk) is determined,
such that when the next condition of a driven axle recognised as steady (SPh) occurs, the value of a magnitude representing the inclination (p) of the roadway in the driving direction is determined from the inclination constants (mk) and from the momentary values of the braking action (z_SPh) and of the rotation speed differential (ds_SPh) between the wheel rotation speed of this driven axle and that of a non-driven axle.

**2.** Method according to Claim 1,
**characterised in that**
the braking action (z) is determined from the time-dependent variation of the wheel rotation speeds at least of the non-driven axles.

**3.** Method according to Claim 1,
**characterised in that**
when a freely rolling condition (HSP) of the at least one driven axle is recognised, it is examined whether this condition is steady, and the values of the rotation speed differential (ds_HSP) and of the braking action (z_HSP) are only determined when a steady condition (SPh) is recognised during the freely rolling condition (HSP).

**4.** Method according to Claim 3,
**characterised in that**
the values of the rotation speed differential (ds_HSP) and of the braking action (z_HSP) are determined from the wheel rolling speed values determined during the steady condition (SPh).

**5.** Method according to Claim 4,
**characterised in that**
the values of the rotation speed differential (ds_HSP) and of the braking action (z_HSP) which were determined during the last condition (SPh) of the freely rolling condition (HSP) of the at least one driven axle which was recognised as steady, are used to determine the inclination constants (mk).

**6.** Method according to Claim 1,
**characterised in that**
the beginning of a freely rolling condition (HSP) of the at least one driven axle is recognised by the occurrence for a short time of:

- a steep increase of the rotation speed differential (ds) between the wheel rotation speeds pf a driven axle and a non-driven axle, and at the same time
- a steep increase of the deceleration (z).

**7.** Method according to Claim 6,
**characterised in that**
the end of a freely rolling condition (HSP) of the at least one driven axle is recognised by the occurrence for a short time of:

- a steep decrease of the rotation speed differential (ds) between the wheel rotation speeds pf a driven axle and a non-driven axle, and at the same time
- a steep decrease of the deceleration (z).

**8.** Method according to Claims 6 or 7,
**characterised in that**

at the latest when a specified time interval (t_HSP) has passed after the beginning of a freely rolling condition (HSP), the said condition is deemed to have ended.

**9.** Method according to Claim 8,
**characterised in that**
the values of the rotation speed differential (ds_HSP) and of the braking action (z_HSP) determined during a freely rolling condition are not used to compute the inclination constants (mk) if the freely rolling condition (HSP) is deemed to have ended because the time interval (t_HSP) has been exceeded.

**10.** Method according to Claims 1 or 3,
**characterised in that**
a steady condition (SPh) is recognised when an observed magnitude, which is the deceleration (z) or a magnitude that depends on the deceleration (z) - such as the rotation speed differential (ds) between the wheel rotations speeds of a driven axle and a non-driven axle - does not, within a time window between a starting time (T = 0) and an end time, deviate outside a time-dependent specified value range for the said magnitude, the said time window commencing after the lapse of a minimum time (Tmin) from the starting time (T=0) and ending after a maximum time (Tmax), the said starting time (T=0) being determined by the fall of the value of the time derivative of the magnitude observed below a specified value.

**11.** Method according to Claim 10,
**characterised in that**
the value range (W) is determined by a lower limit (UG) and an upper limit (OG), such that the lower and upper limits (UG and OG respectively) are linearly related to the time (T) that has passed since the starting time, and the functional value of the upper limit (OG) and of the lower limit (UG) at the starting time corresponds to the value of the observed magnitude at the starting time.

**12.** , Method according to Claim 1,
**characterhed in that**
the inclination constant is formed as the quotient between the difference in the values of the rotation speed differential (ds_SPh), ds_HSP) and the difference in the values of the braking action (z_SPh, z_HSP).

**13.** Method according to Claim 1,
**characterised in that**
during a journey, from all the usable freely rolling conditions (HSP) of the at least one driven axle that are followed by a drive condition (SPh) of a driven axle which is recognised as steady, a new value of the inclination constant (mk) is determined and an average of the values of the inclination constants (mk) determined during the journey is calculated.

14. Method according to Claim 1,
**characterised in that**
no determination of a magnitude representing the inclination (p) of the roadway in the driving direction is carried out unless, since the beginning of the journey, a value for the inclination constant (mk) has been determined at least once.

15. Method according to Claim 1,
**characterised in that**
the specified time interval (dt_max) is determined as a function of the speed of the vehicle.

16. Method according to Claim 15,
**characterised in that**
the specified time interval (dt_max) is specified as a maximum distance covered.

17. Method according to Claim 1,
**characterised in that**
on the basis of the most recently determined value of the roadway inclination (p) a pressure base value is determined, the said pressure base value then being at least added to the nominal brake pressure value resulting from the position of the brake pedal when the inclination (p) corresponds to a downhill slope of the roadway.

18. Method according to Claim 1,
**characterised in that**
the values determined for the wheel rotation speeds of the driven and non-driven axles during a freely rolling condition (HSP) of the driven axle are used to equalise the wheel rotation speeds.

19. Method according to Claim 1,
**characterised in that**
an average value is formed from the values of the rotation speed differential (ds_HSP) of a freely rolling condition (HSP) of the drive wheels determined during a journey.

**Revendications**

1. Procédé pour déterminer la pente d'une chaussée, selon lequel un signal représentant la pente de la chaussée est obtenu dans une unité d'évaluation d'un véhicule, notamment d'un véhicule utilitaire, à partir de signaux de mesure, et selon lequel les vitesses de rotation de roues d'au moins un essieu non moteur et d'au moins un essieu moteur sont détectées, **caractérisé en ce que**

- un état de roulement libre (HSP) de l'au moins un essieu moteur est identifié au moins une fois et pour cet état, au moins la valeur d'une vitesse de rotation différentielle (ds_HSP) entre la vitesse de rotation de roue d'un essieu moteur et la vitesse de rotation de roue d'un essieu non moteur ainsi que la valeur d'un freinage (z_HSP) sont déterminées; et
- au moins une fois pour un état d'entraînement (SPh) identifié comme stationnaire d'un essieu moteur, qui est présent à un intervalle de temps prédéterminé (dt_max) de l'état de roulement libre de l'au moins un essieu moteur, une valeur du freinage (z_SPh) et une valeur de la vitesse de rotation différentielle (ds_SPh) entre la vitesse de rotation de roue au niveau de cet essieu moteur et la vitesse de rotation de roue au niveau d'un essieu non moteur sont déterminées,

et qu'une constante de pente (mk) est déterminée à partir de ces valeurs déterminées,
la valeur d'une grandeur représentant la pente (p) de la chaussée dans le sens de déplacement étant déterminée, lors d'états suivants (SPh), identifiés comme stationnaires, de d'un essieu moteur, est déterminée à partir de la constante de pente (mk) et des valeurs actuelles du freinage (2_SPh) et de la vitesse de rotation différentielle (ds_SPh) entre la vitesse de rotation de roue au niveau de cet essieu moteur et d'un essieu non moteur.

2. Procédé selon la revendication 1, **caractérisé en ce que** le freinage (z) est déterminé à partir de la variation dans le temps des vitesses de rotation de roues au moins de l'essieu non moteur.

3. Procédé selon la revendication 1, **caractérisé en ce que** lorsqu'un état de roulement libre (HSP) de l'au moins un essieu moteur est identifié, un contrôle est effectué pour savoir si cet état est stationnaire, et que les valeurs de la vitesse de rotation différentielle (ds_HSp) et du freinage (z_HSp) sont déterminées uniquement lorsqu'un état stationnaire (SPh) est identifié pendant l'état de roulement libre (HSp).

4. Procédé selon la revendication 3, **caractérisé en ce que** les valeurs de la vitesse de rotation différentielle (ds_HSP) et du freinage (z_HSP) sont déterminées à partir des valeurs de la vitesse de rotation, détectée pendant l'état stationnaire (SPh).

5. Procédé selon la revendication 4, **caractérisé en ce que** les valeurs de la vitesse de rotation différentielle (ds_HSP) et du freinage (z_HSP) sont utilisées pour la détermination de la constante de pente (mk), qui a été déterminée pendant le dernier état (SPh) identifié comme stationnaire de l'état de roulement libre (HSP) de l'au moins un essieu moteur.

6. Procédé selon la revendication 1, **caractérisé en ce que** le début d'un état de roulement libre (HSP) de l'au moins un essieu moteur est identifié par le fait que, pendant un bref intervalle de temps,

   - une augmentation rapide de la différence (ds) entre les vitesses de rotation d'un essieu moteur et d'un essieu non moteur, et simultanément
   - une augmentation rapide de la décélération (z) se produisent.

7. Procédé selon la revendication 6, **caractérisé en ce que** la fin de l'état de roulement libre (HSP) de l'au moins un essieu entraîné est identifiée par le fait que, pendant un bref intervalle de temps,

   - une diminution rapide de la différence (ds) entre les vitesses de rotation d'un essieu moteur et d'un essieu non moteur, et simultanément
   - une diminution rapide de la décélération (z) se produisent.

8. Procédé selon la revendication 6 ou 7, **caractérisé en ce qu'**au plus tard après l'écoulement d'un intervalle de temps prédéterminé (t-HSP) après le début d'un état de roulement libre (HSP), cet état est considéré comme terminé.

9. Procédé selon la revendication 8, **caractérisé en ce que** les valeurs, déterminées pendant un état de roulement libre, de la vitesse de rotation différentielle (ds_HSP) et du freinage (z_HSP) ne sont pas utilisées pour calculer les constantes de pente (mk), lorsque l'état de roulement libre (HSP) est considéré comme terminé sous l'effet du dépassement d'un intervalle de temps (t_HSP).

10. Procédé selon la revendication 1 ou 3, **caractérisé en ce qu'**un état stationnaire (HSP) est identifié lorsqu'une grandeur observée, qui est la décélération (z) ou une grandeur qui dépend de la décélération (z) - telle que la différence (ds) entre les vitesses de rotation de roue d'un essieu moteur et d'un essieu non moteur -, ne quitte pas un intervalle de valeurs, prédéterminé en fonction du temps, pour la grandeur, à l'intérieur une fenêtre temporelle entre un instant de départ (T = 0) et un instant final, la fenêtre temporelle commençant après l'écoulement d'un intervalle de temps minimal (Tmin) après l'instant de départ (T = 0) et se terminant au plus tard après un intervalle de temps maximal (Tmax), et l'instant de départ (T = 0) étant déterminé comme l'instant où la valeur absolue de la dérivée, dans le temps, de la grandeur observée tombe au-dessous dune valeur prédéterminée.

11. Frocédé selon la revendication 10, **caractérisé en ce que** l'intervalle de valeurs (W) est déterminé par une limite inférieure (UG) et par une limite supérieure (OG), aussi bien la limite inférieure (UG) que la limite supérieure (OG) dépendant linéairement du Lemps (T) qui s'est écoulé depuis l'instant de départ, et que la valeur de fonction de la limite supérieure (OG) et de la limite inférieure (UG) à l'instant de départ correspond à la grandeur observée à l'instant de départ.

12. Procédé selon la revendication 1, **caractérisé en ce que** la constante de pente est formée à partir du quotient de la différence entre les valeurs de la vitesse de rotation différentielle (ds_SPh, ds_HSP) et la différence entre les valeurs du freinage (z_SPh, z_HSP).

13. Procédé selon la revendication 1, **caractérisé en ce que** pendant un déplacement un nouvelle valeur de la constante de pente (mk) est déterminé à partir de tous les états de roulement libre (HSP), pouvant être évalués, de l'au moins un essieu moteur avec un état d'entraînement (SPh) suivant identifié comme stationnaire d'un essieu moteur, et qu'une valeur moyenne est calculée à partir des valeurs, déterminées pendant un déplacement, de la constante de pente (mk).

14. Procédé selon la revendication 1, **caractérisé en ce que** la détermination d'une grandeur représentant la pente (p) de la chaussée dans le sens de déplacement n'est pas exécutée tant qu'une valeur de la constante de pente (mk) n'a pas été déterminée au moins une fois depuis le début du déplacement.

15. Procédé selon la revendication 1, **caractérisé en ce que** l'intervalle de temps prédéterminé (dt_max) est déterminé en fonction de la vitesse de déplacement.

16. Procédé selon la revendication 15, **caractérisé en ce que** l'intervalle de temps prédéterminé (dt_max) est prédéterminé en tant que trajet maximal parcouru.

17. Procédé selon la revendication 1, **caractérisé en ce qu'**une valeur de base de pression est déterminée sur la base de la valeur déterminée en dernier lieu de la pente (p) de la chaussée, la valeur de base de pression étant ajoutée à la valeur de consigne de pression de freinage déterminée à partir de la pression de la pédale de frein, au moins lorsque la pente (p) représente une descente de la chaussée.

**18.** Procédé selon la revendication 1, **caractérisé en ce que** les valeurs, déterminées pendant un état de roulement libre (HSP) de l'essieu entraîné, des vitesses de rotation des roues de l'essieu moteur et de l'essieu non moteur sont utilisées pour un équilibrage des vitesses de rotation de roues.

**19.** Procédé selon la revendication 1, **caractérisé en ce qu'**une valeur moyenne est formée à partir des valeurs, déterminées pendant un déplacement, de la vitesse de rotation différentielle (ds_HSP) d'un état de roulement libre (HSP) des roues motrices.

*Fig. 1*

```
        ┌─────────────┐
        │ p=0         │ ──101
        │ F_xxx=0     │
        │ r=0,015     │
        └─────────────┘
               │
        ┌─────────────┐
        │ ds(ωi) z(ωi)│ ──102
        │ F_SPh       │
        └─────────────┘
               │
```

104 — $t\_BBA\_aus > 1s?$  — nein

ja — 105

$\frac{d}{dt} ds > 0,02\, /s \;\wedge\; \frac{d}{dt} Z > 1,5\, \frac{m}{s^3}$  — nein

ja

110 — F_HSP=1 / t_HSP=0

106 — $\frac{d}{dt} ds < -0,01\, /s \;\wedge\; \frac{d}{dt} Z < -1\, \frac{m}{s^3}$ — ja

nein

107 — $F\_HSP=1?$ — nein

ja

108 — $t\_HSP > (2)s?$ — ja

nein

111 — F_HSP=0 / F_HSP_V=0 / t_HSP=0

109 — $F\_SPh=1?$ — nein

ja

112 — ds_HSP_V=ds_SPh / p_HSP=z_SPh-r / F_HSP_V=1

113 — $F\_HSP=1?$ — nein

ja III

II

I   II   III

$F\_HSP= 0$

$F\_HSP\_V=1?$   nein   ja   } 114

$ds\_HSP=(ds\_HSP+ds\_HSP\_V)/ n\_HSP$
$F\_HSP\_V=0$
$F\_mk=1; t\_mk=0$   115

116   $F\_mk=1?$   ja

117   $t\_mk>dt\_max?$   ja

118   $F\_mk=0$
$t\_mk=0$

119   $F\_SPh=1?$   nein   ja

$|ds\_SPh|>0,05 \wedge$
$|z\_SPh|>1,5 \frac{m}{s^2} \wedge$   ja   120
$|ds\_SPh-ds\_HSP|<0,2 \wedge$
$|z\_SPh-p\_HSP-r|<0,1 \frac{m}{s^2}$

nein

$mk\_a=\dfrac{ds\_SPh-ds\_HSP}{z\_SPh-p\_HSP-r}$
$mk=\dfrac{mk(n\_mk-1)+mk\_a}{n\_mk}$   121
$F\_p=1$

122   $F\_p=1?$   ja

nein   $F\_SPh=1?$   123

$p=z\_SPh-r \cdot \dfrac{ds\_SPh-ds\_HPS}{mk}$

1.c

Fig. 2

Fig. 3

## Fig. 4